# EUROPÄISCHE PATENTSCHRIFT

(11) **EP 1 342 626 B1**
(45) Veröffentlichungstag und Bekanntmachung des Hinweises auf die Patenterteilung: **07.11.2007**
(21) Anmeldenummer: 03004760.9
(22) Anmeldetag: 05.03.2003
(51) Int. Cl.: B60R 19/48, B60R 11/00

(54) **Befestigungseinrichtung an einem Kunststoff-Anbauteil für Kraftfahrzeuge**
Fastening arrangement on a plastic part for motor vehicles
Agencement d'une fixation sur une pièce en plastique pour véhicules automobiles

(30) Priorität: 08.03.2002 DE 10210129
(43) Veröffentlichungstag der Anmeldung: 10.09.2003
(73) Patentinhaber: Plastal GmbH, 91781 Weissenburg (DE)
(72) Erfinder: Burkhardt, Steffen, 71083 Herrenberg (DE); Preissler, Dietmar, 91781 Hagenbuch (DE); Sautner, Anton, 91757 Treuchtlingen (DE)
(74) Vertreter: Scherzberg, Andreas Hans

(56) Entgegenhaltungen:
- EP-A- 1 083 099
- DE-A- 19 621 964
- DE-A- 19 819 698
- DE-A- 19 823 761
- FR-A- 2 809 691
- US-B1- 6 203 366

## Beschreibung

Die Erfindung betrifft eine Befestigungseinrichtung nach dem Oberbegriff des Patentanspruchs 1.

Eine solche Einrichtung ist aus DE 198 19 698 A1 bekannt.

Dort ist die an das Anbauteil angeformte Aufnahme, mit der das Aufsteckelement über eine Schnappverbindung verbunden ist, als ein umlaufender Ringbund ausgebildet. Liegt ein solcher Ringbund in einer über den Umfang dieses Ringes konkav verlaufenden, angrenzenden Fläche des Anbauteiles, so ist ein solches Kunststoffbauteil äußerst schwierig herstellbar, da die zur Herstellung erforderlichen Werkzeuge ohne eine komplizierte Teilung nicht rationell entformbar sind.

Hier Abhilfe zu schaffen, ist das Problem, mit dem sich die vorliegende Erfindung beschäftigt und das sie mit einer Ausgestaltung der gattungsgemäßen Einrichtung nach den kennzeichnenden Merkmalen des Patentanspruchs 1 löst.

Die erfindungsgemäße Lösung beruht auf dem allgemeinen Gedanken, den bei der bekannten Einrichtung umfangsmäßig geschlossenen Ringbund als Aufnahme des Anbauteiles umfangsmäßig auf gegenüberliegende Stege zu reduzieren und diese durch Befestigungsmittel mit dem Aufsteckelement derart zu verbinden, daß trotz der gegenüber einem Ringbund weniger steifen einzelnen Stege der Aufnahme eine allseits stabile, belastungsfähige Verbindung sicher gewährleistet ist. Die umfangsmäßigen Freiräume zwischen den Stegen ermöglichen ein einfaches Entformen der Herstellungswerkzeuge.

Eine zweckmäßige Ausgestaltung der Erfindung ist Gegenstand des Unteranspruchs.

Eine besonders vorteilhafte Ausführung ist in der Zeichnung dargestellt.

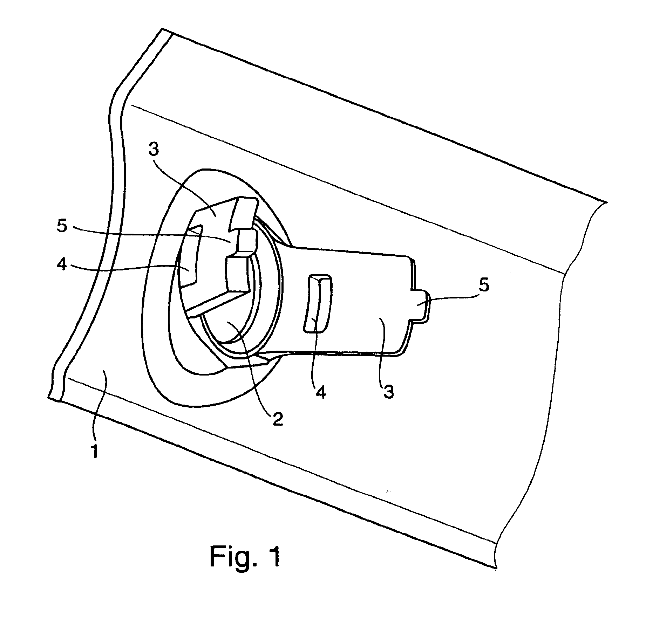

In dieser zeigen in jeweils perspektivischer Darstellung
- Fig. 1: eine Draufsicht auf das Innere eines aus Kunststoff bestehenden Außenteils eines Kraftfahrzeug-Stoßfängers mit einer angeformten, mit Stegen versehenen Aufnahme,
- Fig. 2: das Anbauteil mit der Aufnahme nach Fig. 1 mit einem in diese Aufnahme eingesteckten, über eine Schnappverbindung allseits lagefixierten Aufsteckelement,
- Fig. 3: einen Schnitt durch die Einrichtung nach Fig. 2 längs der in Fig. 1 angegebenen Schnittlinie III-III.

Als ein Anbauteil 1 dient in dem Ausführungsbeispiel ein aus Kunststoff bestehender Außenbereich eines Stoßfängers eines Kraftfahrzeuges. Der Kunststoff ist materialmäßig nicht geeignet, um aus ihm ein elastisch verformbares Schnappverschlußelement ausbilden zu können. Die Befestigungseinrichtung befindet sich bei dem Anbauteil 1 an einer Öffnung 2, in die ein nicht gezeichneter Parksensor als zu befestigendes Teil einführbar ist.

Auf der von der Sichtseite des als Stoßfänger dienenden Anbauteils 1 abgewandten Innenfläche des Stoßfängers ist in einem allseits etwa konkav verlaufenden Flächenbereich um die Öffnung 2 herum eine Aufnahme angeformt. Diese Aufnahme besteht aus zwei diametral gegenüberliegenden Stegen 3. Jeder dieser beiden Stege 3 verläuft auf der Mantelfläche eines in die Öffnung 2 einlaufenden Konus, wobei der Konusdurchmesser in Richtung auf die Öffnung 2 abnimmt. Die Stege 3 verlaufen damit gegenüber der Ebene der Öffnung 2 in einem stumpfen Winkel von dieser Öffnung aus gesehen.

Im Fußbereich jedes der beiden Stege 3 ist ein Durchbruch 4 vorgesehen, der die Form eines länglichen Rechtecks aufweist. An den freien Enden weisen die Stege 3 jeweils in ihrer Umfangsmitte in Längsrichtung fingerartig herausragende Abschnitte 5 auf.

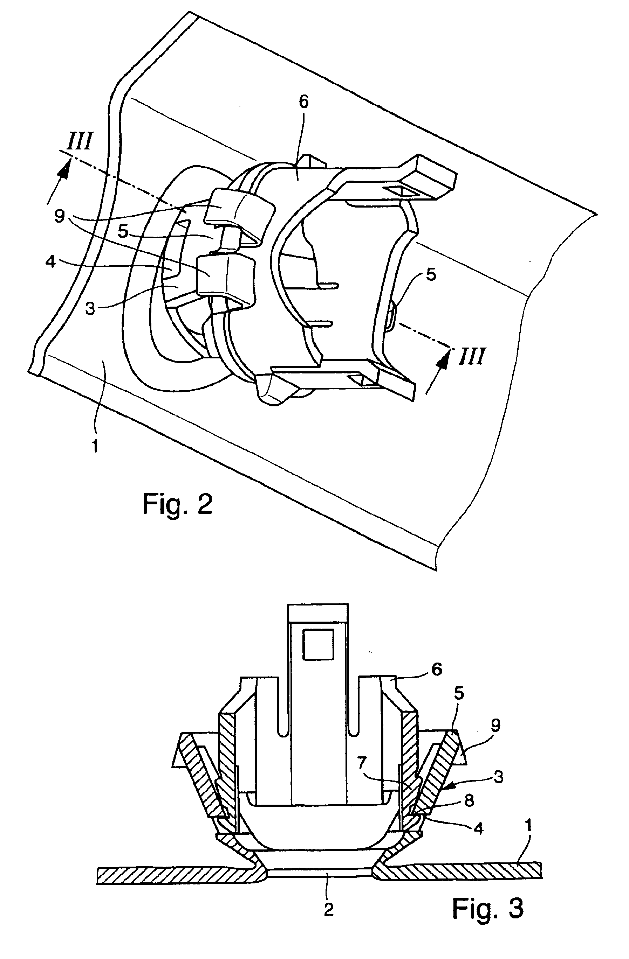

Bei der Darstellung nach Fig. 2 ist ein Aufsteckelement 6 zwischen den Stegen 3 über eine Schnappverbindung gehaltert. Die Schnappverbindung wird erzeugt über zwei an dem Aufsteckelement 6 vorgesehene, nach radial außen federnd ausgebildete Zungen 7, die über an deren Enden vorgesehene radial abragende Widerhaken 8 in die Durchbrüche 4 der Stege 3 nach außen federnd eingreifen. Das Aufsteckelement 6 nimmt den Parksensor als zu befestigendes Teil über ebenfalls einen Schnappverschluß auf.

Um eine allseits stabile Verbindung zwischen den Stegen 3 und dem Aufsteckelement 6 sicherzustellen, sind an dem Aufsteckelement Taschen 9 vorgesehen, in die die freien Enden der Stege 3 mit ihren seitlich an den jeweiligen fingerartigen Abschnitt 5 angrenzenden Bereichen allseits lagefixierend eingreifen. Gebildet werden diese Taschen 9 jeweils von einem Paar L-förmiger, an das Aufsteckelement 6 angeformter Winkel-Stege. Durch die Mittel-Abschnitte 5 an den Stegen 3 ist eine Fixierung zwischen dem Aufsteckelement 6 und den Stegen 3 in Umfangsrichtung gegeben. Die axiale Fixierung zwischen dem Aufsteckelement 6 und den Stegen 3 der Aufnahme erfolgt an einem axialen Ende durch den jeweiligen Widerhaken 8 an den Zungen 7 des Aufsteckelementes 6 und einer zugeordneten Anlagefläche sowie an dem anderen Ende innerhalb der Taschen 9.

Bei der Darstellung in Fig. 2 ragen die Stege 3 in Längsrichtung des als Außenbereich eines Stoßfängers dienenden Anbauteils 1 ab. Die umfangsmäßigen Freiräume zwischen den beiden Stegen 3 erstrecken sich dagegen in Querrichtung. Die insbesondere aus Fig. 2 ersichtliche Anordnung und Ausbildung der die Öffnung 2 umgebenden Aufnahme mit den beiden umfangsmäßig voneinander getrennten Stegen 3 eignet sich ausgezeichnet für eine Herstellung des aus Kunststoff bestehenden Stoßfänger-Außenbereiches mittels einfach teilbarer Formwerkzeuge.

## Patentansprüche

1. Befestigungseinrichtung an einem Kunststoff-Anbauteil (1) für ein Kraftfahrzeug, insbesondere an einem Stoßfänger (1), mit einer an dem Anbauteil (1), einstückig angeformten Aufnahme für ein an dem Anbauteil (1) mittels einer Schnappverbindung zu befestigendes Teil und mit einem Aufsteckelement (6) mit elastisch verformbaren Schnappverbindungselementen (7,8) für lagefixierende Schnappverbindungen mit einerseits dem zu befestigenden Teil und andererseits der Aufnahme (2,3) an dem Anbauteil (1), wobei das Aufsteckelement (6) in die Aufnahme einschiebbar ausgebildet ist,
**gekennzeichnet durch,**
- die Aufnahme (2,3) des Anbauteils (1) besitzt für den Eingriff mindestens einer der Schnappverbindungsmittel (7,8) des Aufsteckelementes (6) im wesentlich gegenüberliegende, umfangsmäßig begrenzte Stege (3) mit mindestens jeweils einem Hinterschnitt (4) mit Bezug auf die Einschieberichtung des Aufsteckelementes (6) zur Erzielung der betreffenden Schnappverbindung,
- das Aufsteckelement (6) ist mit Taschen (9) für den Eingriff der Stege (3) der Aufnahme des Anbauteils (1) versehen, in denen die Stege (3) mit jeweils frei auslaufenden Endbereichen in einer senkrecht zur Einschieberichtung des Aufsteckelementes (6) verlaufenden Ebene allseits lagefixiert sind.

2. Befestigungseinrichtung nach Anspruch 1,
**dadurch gekennzeichnet,**
**daß** das Aufsteckelement (6) in der Aufnahme des Anbauteils (1) axial fixiert ist durch Anliegen der Stege (3) innerhalb der Taschen (9) des Aufsteckelementes (6) und der als Zungen (7) ausgebildeten Schnappverbindungsmittel des Aufsteckelementes (6) an den als Durchbrüchen (4) ausgebildeten Hinterschnitten der Stege (3).

## Claims

1. Fastening device on a plastics attachment portion (1) for a motor vehicle, in particular on a bumper (1), having a receiver that is preformed on the attachment portion (1) in one piece therewith for a portion that is to be fastened on the attachment portion (1) by means of a snap connection and having a plug-on element (6) with elastically deformable snap-connection elements (7, 8) for position-fixing snap connections to, on the one hand, the portion to be fastened and, on the other hand, the receiver (2, 3) on the attachment portion (1), with the plug-on element (6) being formed so that it can be pushed into the receiver, **characterised by**:
- the receiver (2, 3) of the attachment portion (1) has for the engagement of at least one of the snap-connection means (7, 8) of the plug-on element (6) substantially opposing webs (3), which are delimited in terms of circumference, having at least one respective undercut (4) in relation to the direction of insertion of the plug-on element (6) in order to obtain the relevant snap connection,
- the plug-on element (6) is provided with pockets (9) for the engagement of the webs (3) of the receiver of the attachment portion (1), in which pockets the webs (3), with respective end regions that run out freely in a plane that extends perpendicularly to the direction of insertion of the plug-on element (6), are fixed in position on all sides.

2. Fastening device according to claim 1, **characterised in that** the plug-on element (6) is axially fixed in the receiver of the attachment portion (1) by virtue of the fact that the webs (3) rest inside the pockets (9) of the plug-on element (6) and the snap-connection means of the plug-on element (6), formed as tongues (7), rest against the undercuts, formed as breakthroughs (4), of the webs (3).

## Revendications

1. Agencement d'une fixation sur une pièce (1) en matière plastique d'un véhicule automobile, notamment sur un pare-chocs (1), avec un support réalisé d'un bloc avec la pièce (1) pour un organe à fixer à la pièce (1) à l'aide d'une liaison encliquetée et avec un élément enfichable (6) pourvu d'éléments d'encliquetage (7, 8) déformables élastiquement destinés à réaliser des liaisons encliquetées assurant le positionnement entre d'une part l'organe à fixer et d'autre part le support (2, 3) sur la pièce (1), l'élément enfichable (6) étant agencé de manière à s'engager dans le support,
**caractérisé par**
le support (2, 3) comporte pour l'accrochage d'au moins l'un des éléments d'encliquetage (7, 8) de l'élément enfichable (6) des bras (3) limités dans la direction périphérique qui sont disposés essentiellement en vis-à-vis et comportent au moins chacun une portion formant contre-dépouille (4) par rapport à la direction d'introduction de l'élément enfichable (6) aux fins de réaliser la liaison encliquetée concernée,
l'élément enfichable (6) est pourvu de logements (9) pour l'engagement des bras (3) du support de la pièce (1), dans lesquels les bras (3) sont immobilisés dans toutes les directions dans un plan perpendiculaire à la direction d'introduction de l'élément enfichable (6) par des portions d'extrémité libres.

2. Agencement d'une fixation selon la revendication 1, **caractérisé par le fait que** l'élément enfichable (6) est bloqué axialement dans le support de la pièce (1) par appui des bras (3) à l'intérieur des logements (9) de l'élément enfichable (6) et des éléments d'encliquetage (7, 8) de l'élément enfichable (6) dans les portions formant contre-dépouilles des bras (3) conformées en ouvertures (4).
